# EUROPEAN PATENT APPLICATION

(11) **EP 2 565 625 A1**
(43) Date of publication of application: **06.03.2013**
(21) Application number: 11180073.6
(22) Date of filing: 05.09.2011
(51) Int. Cl.: G01N 21/47, G01B 9/02

(54) **Optical measurement system and method for operating an optical measurement system**

(71) Applicant: Ludwig-Maximilians-Universität München, 80539 München (DE)
(72) Inventor: Huber, Robert Alexander, 83530 Schnaitsee (DE); Klein, Thomas, 85748 Garching (DE); Wieser, Wolfgang, 80687 München (DE); André, Raphael, 85764 Oberschleißheim (DE)
(74) Representative: Epping, Wilhelm

(57) **Abstract**

In at least one embodiment, the optical measurement system (100) comprises a light source (2), a detector (3) and at least two optical channels (a, d). At least one of the optical channels is designed to emit a first beam (F) of radiation generated in the light source (2) and is thus an active channel (a) at least temporary. Moreover, at least one of the optical channels is designed to receive a second beam (S) of radiation reflected and/or scattered by a sample (4) and is thus a detection channel (d) at least temporary. The at least one first beam (F) and the at least one second beam (S) overlap in and/or on the sample (4) in an overlap region (5). An angle (A) between at least two of the beams (F, S) is chosen so that the beams are separated from each other in an optical far field. The detector (3) is designed to interferometrically derive information from the overlap region (5) by means of at least one second beam (S).

## Description

An optical measurement system is provided. A method for operating an optical measurement system is additionally provided.

An object to be achieved is to provide an optical measurement system with a high scanning rate and a high signal-to-noise ratio. A further object to be achieved is to provide a method for operating such an optical measurement system.

According to at least one embodiment of the optical measurement system, it comprises at least one light source. Preferably, the light source is a so-called swept light source which in operation periodically changes its output wavelength. Suitable light sources are disclosed, for example, in the documents WO 2010/026197 A1, WO 2011/033031 A1 and US 2006/187537 A1, the disclosure content of these documents is hereby included by reference. The wavelength produced by the light source is swept preferably with a frequency of at least 40 kHz or at least 80 kHz. As light source, Fourier domain mode locked lasers, for short FDML lasers, micromechanical light sources or so-called VCSELs might be used, too.

According to at least one embodiment, the optical measurement system comprises a detector. The detector can comprise a plurality of components such as photodiodes, amplifiers and/or analogue digital converters and/or a computer. The detector can also comprise optical components such as fibers, optical couplers, beam splitters, delay lines or interferometers.

According to at least one embodiment, the optical measurement system comprises at least two optical channels. An optical channel is a defined path of light within the system which is distinguishable from other optical paths. For example, different optical paths and thus optical channels use different optical fibers at least partially. Certain optical components of the system might be shared by different optical channels.

According to at least one embodiment, one or more than one of the optical channels is designed to emit a first beam of radiation generated in the light source at least temporary. Thus, this optical channel at least temporary emits radiation. In particular when emitting radiation, this channel is referred to as an active channel.

According to at least one embodiment of the optical measurement system, at least one of the optical channels is designed to receive a second beam of radiation at least temporary. The radiation to be received is in particular a radiation that is reflected and/or scattered by a sample that is investigated with the system. When receiving radiation and leading this radiation in particular to the detector and deriving a signal from this radiation, this channel is referred to as a detection channel. Said corresponding optical channel is a detection channel at least temporary.

According to at least one embodiment of the optical measurement system, the term second beam can be understood that from a distinct optical phase volume light is collected. Thus, second beam can refer to the volume covered by a bundle of light rays that would be emitted instead of being received by the corresponding detection channel. In other words, the term second beam describes a virtual volume that would be covered when the corresponding detection channel would be used to emit radiation. Hence, a numerical aperture can also be assigned to the detection channel in a manner similar to, for example, common microscope objectives. The second beam might be regarded as a visual line.

According to at least one embodiment of the system, the at least one first beam and the at least one second beam overlap in and/or on the sample in an overlap region. That can mean, photons of the first beam and of the second beam at least partially travel through the same space in at least one location. It is not necessary that the photons are contained in that space at the same time. The overlap region could be a two-dimensional region, preferably, the overlap region is three-dimensional. In other words, photons from the first beam can be transferred into at least one of the detection channels by interaction with the sample wherein said at least one detection channel preferably is different from the active channel.

According to at least one embodiment of the optical measurement system, the term overlap region also includes a volume from which photons that have undergone multiple scattering in the sample can get into the at least one detection channel.

According to at least one embodiment of the system, there is an angle between at least two of the beams emitted or received by the optical channels. The angle exceeds 0° and is less than 180°. Preferably the angle is less than 135° or less than 90°. The angle is chosen in a way so that the beams are separated from each other in an optical far field. In other words, in the optical far field there would be no significant interference between said beams and/or there would be no significant overlap region. Such an angle can be applied pairwisely between all of the second beams and/or between all of the first and second beams, in particular with exception of one of the second beams which is congruent with the first beam.

According to at least one embodiment of the optical system, the detector is designed to interferometrically derive information from the overlap region of the sample to be investigated. The information is derived at least by means of at least one of the second beams. In particular, radiation of at least one of the second beams interferes with a part of radiation generated by the light source and not being reflected or scattered by the sample.

Preferably, the system includes at least one reference arm in which the radiation to be interfered with the at least one second beam is led. An optical length of the reference arm can likewise be adapted so that radiation from the reference arm can be brought to temporal overlap for example in an interferometer.

In at least one embodiment, the optical measurement system comprises a light source, a detector and at least two optical channels. Each one of the optical channels is designed to receive and/or to emit a beam of radiation. At least one of the optical channels is designed to emit a first beam of radiation generated in the light source and is thus an active channel at least temporary. The first beam is preferably led to a sample to be investigated with the optical measurement system. Moreover, at least one of the optical channels is designed to receive a second beam of radiation reflected and/or scattered by a sample and is thus a detection channel at least temporary. The radiation in the second beam in particular is a part of the radiation from the first beam. The at least one first beam and the at least one second beam overlap in and/or on the sample in an overlap region. An angle between at least two of the beams is chosen so that the beams are separated from each other in an optical far field. Moreover, the detector is designed to interferometrically derive information from the overlap region of the sample by means of at least the second beam or by means of at least one of the second beams.

According to at least one embodiment of the system, it is designed for optical coherence tomography, OCT for short, and/or for profilometry. In particular, the system is a time encoded frequency domain OCT system, TEFD-OCT for short. The system can also be a swept source OCT system, SS-OCT for short, or an optical frequency domain imaging system, OFDI for short.

According to at least one embodiment, the radiation of the first beam and the second beam comprises or consists of wavelengths in the visible and/or infrared spectral range. In particular, the wavelength of radiation is between 700 nm and 1.7 µm, inclusive.

According to at least one embodiment, a spectral width of the radiation in the at least one first beam is at least 0.5% of a central wavelength of that radiation. For example, if the central wavelength is 1.3 µm, than the spectral width is at least 6.5 nm. Preferably, the spectral width is at least 1% or at least 2% of the central wavelength. The spectral width is measured preferably at full width at half maximum, FWHM for short.

According to at least one embodiment, the optical measurement system comprises at least two detection channels. In particular, the system includes N detection channels wherein N could be any natural number between 2 and 19, inclusive, or between 3 and 7, inclusive. For example, the system comprises 4 or 7 detection channels. Preferably, the detection channels can be operated at the same time and can derive information from radiation that stems from the same first beam.

According to at least one embodiment, the at least one active channel is also a detection channel. In other words, by part of the same optical channel radiation can be emitted in a direction to the sample and also can be received when scattered or reflected by the sample.

According to at least one embodiment, for the angle it applies: sin A ≥ 0.2 NA. NA is the numerical aperture of the first beam and/or of at least one of the corresponding second beams. Alternatively or additionally, the angle A can be at least 0.15 times or 0.25 times a full divergence angle of the first beam as defined by Gaussian beam optics.

According to at least one embodiment of the system, for the angle A it applies: 0.5° ≤ A ≤ 20° or 2° ≤ A ≤ 60° or 2° ≤ A ≤150°.

Such angles can be applied pairwisely between all of the second beams.

According to at least one embodiment, the system further comprises a scanner. The scanner can include at least one moveable mirror and/or at least one translation stage. With the scanner it is possible to scan a one-dimensional or two-dimensional area of the sample, seen in top view. It is possible to move the sample itself relative to optics of the system and/or to move the optics of the system relative to the sample and/or to vary a direction of the beams with the optics so that the beams hit different locations of the sample at different times.

According to at least one embodiment, the detector includes at least two photodiodes. In particular, the photodiodes are optically connected with the two outputs of an interferometer in which the second beam is interfered with a reference beam. Preferably, for each detection channel there are two or more photo diodes.

According to at least one embodiment, the detector includes a dual balanced differential amplifier for each one of the detection channels. Inputs of the amplifier are preferably connected with the photodiodes for the corresponding channel.

According to at least one embodiment, the optical measurement system comprises a detector that includes at least one analogue digital converter that comprises at least two electronic channels. Alternatively, the detector could also comprise at least two analogue digital converters with only one channel. The converter is preferably an 8 bit, 10 bit 12 bit, 14 bit or 16 bit converter. A sample rate of the converter is preferably at least 0.2 Gsample/s or at least 0.5 Gsample/s or at least 1 Gsample/s or at least 2 Gsample/s.

According to at least one embodiment, the optical measurement system is designed to record a cross-sectional and at least two-dimensional picture of the sample. Preferably, the picture is taken by the system without destroying the sample. The picture is preferably three-dimensional.

According to at least one embodiment, the beams and/or their beam axes are not arranged within a plane. For example, the beams are arranged in a trihedral manner. In other words, the beams could be arranged sheaf-like or in the manner of a fan shot.

With such an optical measurement system, inter alia the following problems can be addressed:
Optical systems like OCT systems often are limited by shot noise. That is, only few photons are reflected in different depth of a sample back to a detection unit. In order to increase the number of photons to be received by the detection unit and thus to increase a signal-to-noise ratio, it is possible to increase an averaging time for each pixel of the picture to be taken. This significantly reduces the scanning speed of such a system. Another possibility would be to increase the optical output power a sample is irradiated with. In particular for applications in medicine, for example for the examination of the human eye, increasing the optical output power is not an option. Another solution would be to increase the numerical aperture, NA for short, which is associated with a distinct detection unit. But this would reduce an imaging range along the beam axis and, hence, a depth range that can be detected.

With the optical measurement system described above, due to the use of more detection channels, the solid angle from which radiation can be received from the sample can be increased. Approximately, the solid angle when using two detection channels is twice the solid angle using only one detection channel and so on. Hence, the signal to noise ration can be increased without losing image range along a beam axis and without slowing a scanning rate.

Another point to be addressed is noise due to speckle. Speckles come from mutual interference of a set of wave fronts. Noise due to speckle can be reduced by averaging for example over a greater region of the sample. By this spacial averaging, a lateral resolution is reduced. This kind of averaging would also reduce the scanning speed of the system as over more than one pixel in a lateral direction has to be averaged. With the system described above, it is possible to average over the different detection channels when/after recording the data of on single pixel. As the detection channels work at the same time, no loss of scanning speed occurs. Moreover, a lateral resolution loss is avoided.

In particular in FEFD-OCT applications, for the data acquisition fast analogue digital converters, ADC for short, have to be used. Hence, the analogue digital converters typically have only 8 bit. Thus, a dynamic range of a detector unit is comparably low. An increase of the bit number of the ADC again would lead to a loss of scanning speed. In particular when the detection channel and/or the second beam are oriented perpendicular to a surface of the sample, a comparably intensive specular reflex of the first beam could enter the corresponding detection channel and can lead to a saturation of the analogue digital converter. Because of the use of more than one detection channels and their angular arrangement, at least one of the detection channels is not oriented perpendicular with the surface of the sample. Hence, at least one of the detection channels is free of such a strong specular reflex from the surface of the sample. Hence, signal-to-noise ratio and picture quality can be enhanced.

In medical applications it is often desired to measure a flow rate of fluids in tissues. When using only one detection channel or more detection channels which are arranged in one plane, the possibility to measure flow rates by means of Doppler beats is very limited. Full three-dimensional information about flow rates can be derived by an optical measurement system as described above when the detection channels are not arranged within a plane, for example, when the detection channels are arranged in a trihedral manner.

According to at least one embodiment of the system, foci of at least two of the second beams have different locations. In particular, the second beams overlap with the first beam on different locations. In other words, the second beams can have different overlap regions with the first beam.

According to at least one embodiment of the system, a diameter of the first beams and second beams in the foci of these beams is greater than the product of the angle in radian measure and a coherence length of the radiation in the at least one first beam. Inter alia the coherence length of the radiation determines the imaging range along the beam axis of the first beam and hence a maximum depth along which interferometric data can be obtained from the sample.

The coherence length and thus the image range in the sample is for example between 1 mm and 5 mm inclusive, in particular around 2 mm. A diameter of the beams in the foci is for example between 1 µm and 20 µm inclusive, in particular between 2 µm and 50 µm inclusive, especially circa 20 µm.

According to at least one embodiment of the system, a spacial overlap along the beam axis of the first beam has a length of in between 0.1 and 10 times the coherence length of the radiation of the first beam. A space of one of the beams is for example that volume in which an intensity of the radiation of the corresponding beam is above 50% of a maximum intensity, in a direction perpendicular to the corresponding beam axis. Hence, corresponding volumes of the beams might be determined by FWHM values in a lateral direction of the corresponding beam.

According to at least one embodiment, the system comprises at least two active channels. In other words, the system comprises at least two optical channels which at least temporary emit radiation generated by the light source.

According to at least one embodiment, at least one of the optical channels is provided with an optical switch so that said optical channel or part of said optical channel can be switched from being an active channel to being a detection channel and vice versa. Thus, by the optical switch it is possible to temporary lead radiation generated by the light source along that optical channel onto the sample.

According to at least one embodiment, the system comprises at least one optical coupler which is connected with at least one optical fiber wherein that fiber forms a delay line of fixed length. By the optical coupler, for example a sequence of the radiation generated in the light source is divided in particular into two equal or nearly equal parts that travel along different optical fibers. Fixed length of the delay line can mean that there is no movable mirror or the like to purposefully change the distance the light has to travel in the delay line. Nevertheless, minimal changes of the delay line length due to temperature changes or the like can be possible.

According to at least one embodiment, a repetition rate of the light source is at least doubled by the use of an optical coupler in connection with a delay line of fixed length. In particular, the system comprises a plurality of such couplers and delay lines so that the repetition rate can be for example tripled or quadrupled or increased by a factor of eight.

According to at least one embodiment, the optical measurement system comprises at least three or at least four optical channels with at least four corresponding beams. These beams are arranged in a rotational symmetric manner. For example, one of the beams is arranged in a center and the other beams are arranged around this centric beam in equiangular distances.

According to at least one embodiment of the system, at least two of the optical channels are provided with different numerical aperture. With these channels, different lateral or axial resolutions can be achieved.

According to at least one embodiment, the system comprises and endoscope. By means of the endoscope, the first and the second beams are led to/from the sample. With such an endoscope, the system can be used for medical purposes, in particular for the investigation of vasculature and the like.

According to at least one embodiment, the system comprises exactly one optical channel that can be used both to emit a first beam and to receive a second beam and thus being configured as an active channel and as a detection channel. All remaining channels can be detection channels.

A method for operating an optical system is additionally provided. For example, the method may be used to operate an optical measurement system as described in relation to one or more of the above stated embodiments. Features of the method are therefore also disclosed for the optical measurement system and vice versa.

In at least one embodiment, the method comprises at least the following steps:
- providing the optical measurement system,
- providing and placing a sample,
- irradiating the sample with radiation from the light source with at least one of the active channels,
- detecting part of said radiation after interaction with the sample with at least one of the detection channels,
- recording a plurality of interferograms from the reflected radiation, and
- producing an at least two-dimensional picture of the sample.

According to at least one embodiment of the method, from a particular region of the sample at least two scans are recorded. In other words, this region is irradiated at least twice with the at least one first beam and then detected by the detection channels.

According to at least one embodiment of the method, each one of that scans is recorded with a different active channel and/or with a sample being differently oriented relative to the beams. In other words, either the active channel or the illumination conditions are changed between recording said scans. For example, the beams and/or the sample are rotated by a certain angle between recording said scans.

According to at least one embodiment of the method, an interferogram of radiation from the second beams with reference radiation from the radiation source is Fourier transformed. Basis of the Fourier transformation is in particular a signal from the dual balanced differential amplifier the two photodiodes for the detection channel are connected with.

According to at least one embodiment of the method, the at least two scans recorded under different illumination conditions are averaged to produce the picture. The averaging could be a coherent or an incoherent one. Incoherent averaging can mean that first a Fourier transformation of an interferogram is performed and that afterwards the averaging is done. Coherent averaging in particular means that first the signals for example from the dual balanced differential amplifier are averaged and that afterwards the Fourier transformation is done.

According to at least one embodiment of the method, Doppler information is recorded by means of at least two of the detection channels wherein that Doppler information is used to determine a velocity of flow of material in the sample in a direction transverse to the at least one first beam and/or the beam axis of the first beam.

According to at least one embodiment of the method, only selected detection channels are used to produce the picture. In other words, not all of the detection channels are then used. It is possible that for different pixels of the picture different detection channels are used or not used. By selecting the detection channels, such channels which receive specular reflections from the sample and thus leading to a saturated analogue digital converter channel can be removed. By this way, the signal-to-noise ratio can be enhanced.

According to at least one embodiment of the method, two different scans are recorded with different amplification factors of the amplifiers. By means of that, a dynamic range can be increased by merging at least two scans.

In particular with the help incoherent averaging, noise resulting from speckle can be reduced. The use of more than one detection channel can also be used to reduce the power of the radiation the sample has to be illuminated with.

Each one of the detection channels comprises phase information from the light reflected and/or scattered by the sample. Thus it is possible to virtually enhance the transversal resolution of the picture to be recorded, compare for example the method of synthetic aperture. Moreover it is possible to numerically correct the aberration of optics of the system and/or to increase an image range along an axial direction and thus a confocal parameter.

Moreover, the information taken from the different directions through the at least two detection channels can be used to determine an anisotropy of the sample. The anisotropy can give information about the orientation of structures in the sample.

An optical measurement system described herein and a method for operating such a system will be explained in greater detail below with reference to the drawings and with the aid of exemplary embodiments. Elements which are the same in the individual figures are indicated with the same reference numerals. The relationships between the elements are not shown to scale, however, but rather individual elements may be shown exaggeratedly large to assist in understanding.

In the drawings:
- Figure 1: shows a schematic representation of an exemplary embodiment of an optical measurement system described herein,
- Figures 2, 4, 5 and 8 to 11: show schematic representations of optical channels for exemplary embodiments of optical measurement systems described herein,
- Figures 3 and 7: show schematic perspective representations of beams of radiation of exemplary embodiments of optical measurement systems described herein, and
- Figure 6: shows a schematic representation of a method step described herein according to which active optical channels are changed during taking a picture of a sample.

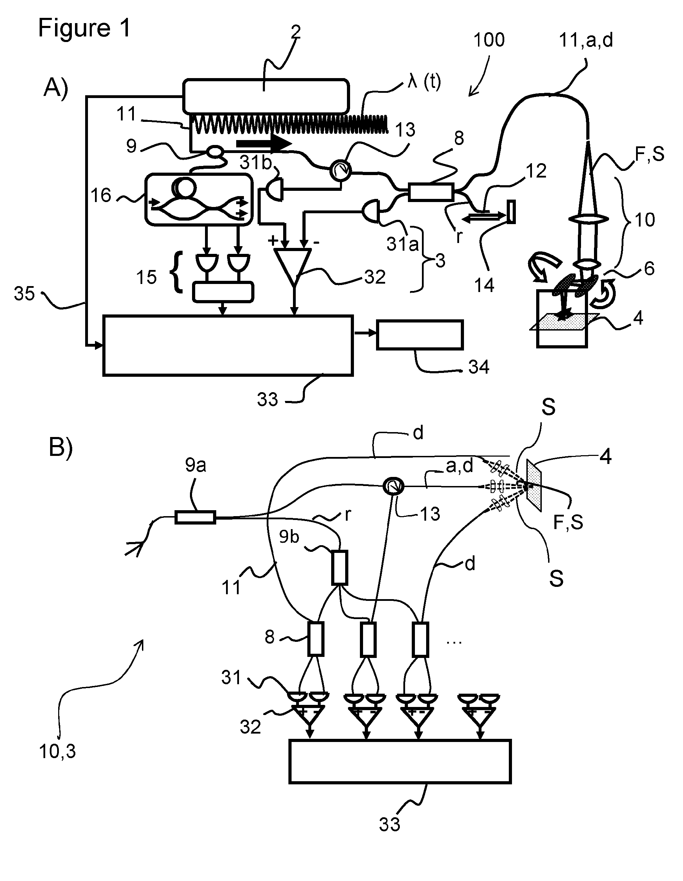

In figure 1A, an exemplary embodiment of an optical measurement system 100 is schematically illustrated. The system 100 comprises a light source 2 which is preferably a so-called swept light source. Thus, a wavelength of radiation generated by the light source 2 periodically changes over time. The periodicity preferably corresponds to a frequency of at least 30 kHz. The light source 2 is optionally triggered by a trigger line 35 which is connected with an analogue digital converter 33. The analogue digital converter 33 is connected to a computer 34. It is also possible that the light source 2 functions as a trigger for rest of the system 100.

By means of an optical fiber 11, the radiation of the light source 2 is led to a beam splitter 9. A part of the radiation is led to an interferometer 16 which is connected to a calibration unit 15. The interferomenter 16 and the calibration unit 15 are optional.

Another part of the radiation is led to an optical circulator 13. Further on, the radiation reaches an optical coupler 8 which divides the radiation in a reference arm r and optical channels a, d. The reference arm r comprises a delay line 12 of variable length and a reference mirror 14. At an end of the optical channels a, d, a first beam F is emitted and led by optics 10 to a sample 4 via a scanner 6. Radiation from the first beam F which is reflected and/or scattered by the sample 4 is collected by the optics 10 and led back into the optical channels a, d in the form of a second beam S. Between the first beam F and the second beam S there is an angle A, not shown in Figure 1A. For the angle A it applies: sin A ≥ 0.2 NA, wherein NA is the numerical aperture of The first beam F.

In the optical coupler 8, the radiation from the reference arm r and the radiation reflected by the sample 4 is brought to interference. The interference pattern is detected by the photodiodes 31a, 31b which are connected with the input of a differential amplifier 32. An output of the differential amplifier 32 is led into the analogue digital converter 33. From the time dependent signal from the differential amplifier 32 which is based on an interference signal from the radiation reflected by the sample and radiation from the reference arm r is then analyzed in the computer 34. Thus, the interference signal is based on the second beam S. With regard to data analysis, more details are contained in the document US 2006/187537A1 the disclosure content of which is hereby incorporated by reference.

The optical measurement system 100 of figure 1A comprises two optical channels: when radiation is led to the sample 4, said optical channel is an active channel a. When radiation from the second beam S is led by the fiber 11 to the photodiodes 31a, 31b, the optical channel is a detection channel d.

Hence, part of the optical channels is both used for the active channel a and for the detection channel d. For most of the optical path of the radiation, the active channel a and the detection channel d use the same optical components. In a direction away from the sample 4 along an optical path, the optical paths of the active and the detection channels a, d differ from each other from the optical coupler 8 on to the photodiodes 31a, 31b and the light source 2, respectively. Moreover, the optical channels a, d differ from each other with regard to the direction of the light. Optics of the system 100 are not shown detailed in figure 1A.

In figure 1B, the detector 3 and the optics 10 of another exemplary embodiment of the system 100 with more than two optical channels a, d are shown. The corresponding system 100 comprises four channels, one active channel a and three detection channels d. Each one of the detection channels is connected with two photodiodes 31 and a differential amplifier 32. Moreover, radiation from a reference arm r which directly comes from the light source (not shown in figure 1B) is used to interfere with the radiation from the sample 4 in the detection channels d in the optical couplers 8. Other than illustrated in figure 1B, there can be more than three detection channels d. There is an angle between adjacent detection channels d.

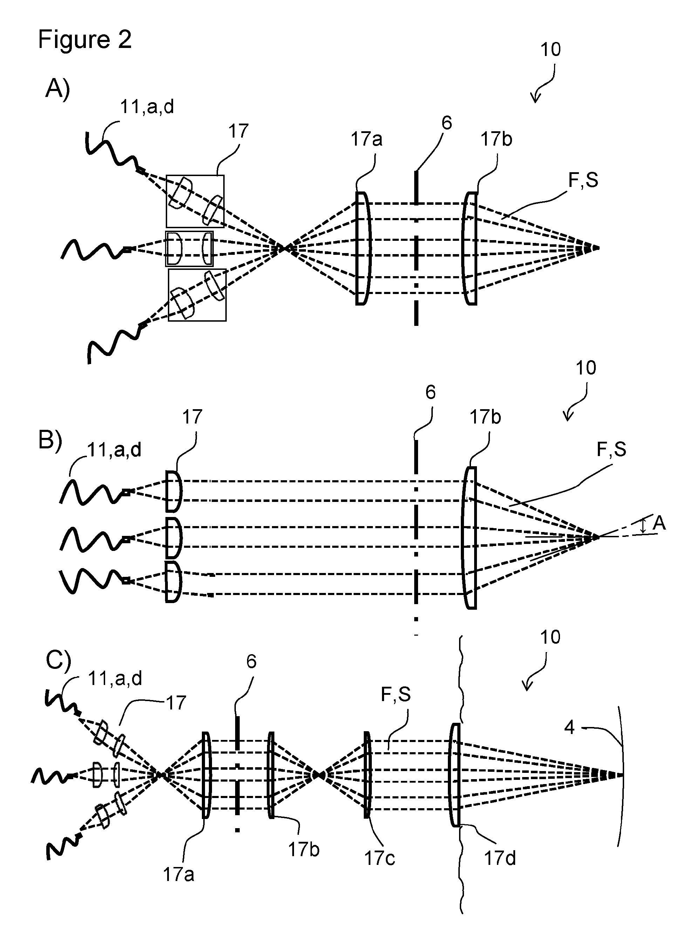

In figure 2, schematic representations of embodiments of the optics 10 of exemplary embodiments of systems 100 can be seen. Each one of the for example three fibers 11 ends up in a pair of lenses 17 so that the beams are focused in one point. Afterwards, the beams F, S are parallelized by another lens 17a and led via a scanner 6 realized for example by a moveable mirror to another lens 17b. By means of the latter lens 17b, the beams F, S are focused onto a sample, not shown in figure 2. The lenses could be microlenses, axiconlenses and/or spherical lenses, for example.

According to figure 2B, the beams F, S are parallelized by the lens 17 and, after passing the scanner 6 are then focused onto the sample by the lens 17b. The scanner 6 is drawn only schematically.

With regard to the sample, not shown, to be investigated, there is an angle A between two adjacent beams F, S. The angel A is chosen in a way so that the beams F, S can be separated from each other in an optical far field.

For example, a numerical aperture for each one of the beams F, S is around 0.1. An average diameter of the beams between the two lenses 17, 17b is for example around 1.5mm. An average distance between two of the adjacent beams F, S might be chosen to be around 2mm near the lens 17b. The mentioned numerical values are to be understood with a tolerance for example of at most a factor of 5 or at most a factor of 3. These numerical values might also be applicable in all other exemplary embodiments.

The optics 10 as depicted in figure 2C comprises an additional lens 17c which nearly parallelizes the beams F, S. The sample 4 in this case is for example a retina of a human eye. Hence, a focusing onto the retina 4 is done by the lens 17d of the human eye.

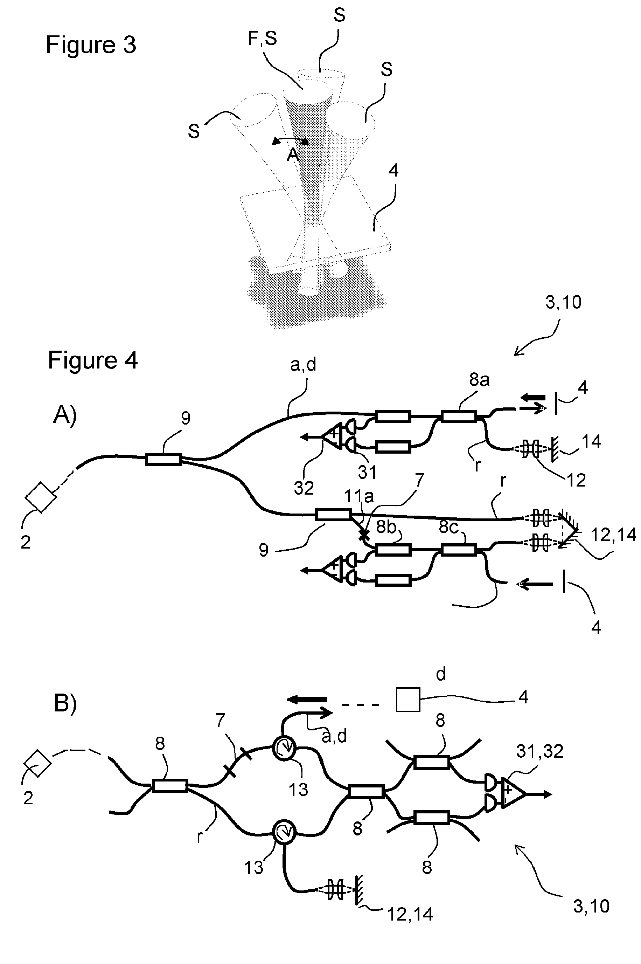

In figure 3, a perspective representation of the beams F, S near the sample 4 is shown. The five beams, four second beams S and one first beam F which is congruent with one of the second beams S, are arranged in a trihedral manner with the first beam F in the center of the trihedral. The first beam F is oriented nearly perpendicular with regard to the sample 4. All the second beams S are arranged pairwisely with an angle A in between.

The term second beam in particular can refer to a volume that would be covered by light if the corresponding detection channel would be used as an active channel. Thus, the term second beam is used in analogy to the term first beam although in the second beams no or virtually no radiation travels in a direction to the sample 4.

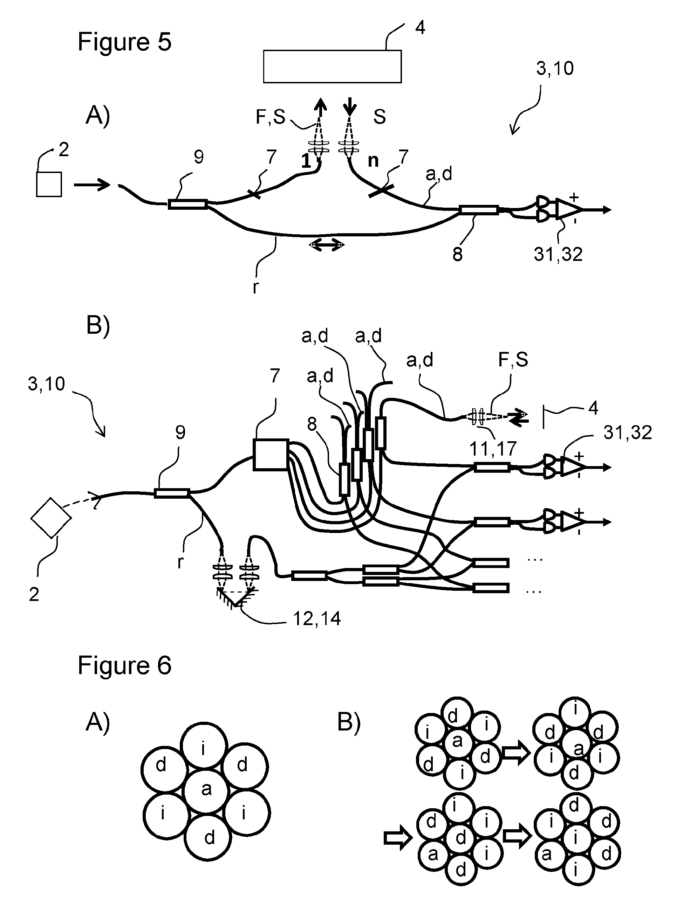

In figures 4 and 5, further exemplary embodiments of the optical channels a, d for the system 100 are illustrated.

According to figure 4A, in the upper half of the representation, an optical channel that is both the active channel a and the detection channel d is shown. By means of the optical coupler 8a, part of the radiation from the light source 2 is led into the reference arm r. The optical coupler 8A is also used to bring the radiation from the reference arm r in interference with radiation coming from the sample 4.

In the lower half of figure 4A, another detection channel d is realized. The buildup of the upper half in figure 4A mostly corresponds to the buildup seen in the lower half. However, there is an additional fiber 11a that connects the beam splitter 9 with the optical coupler 8b. This fiber 11a comprises an optical switch 7. When the optical switch 7 is closed, additional radiation from the light source 2 is led through the lower half to the sample 4. When the switch 7 is opened, no radiation from the light source 2 is led to the sample 4 through the lower half. Hence, by means of the switch 7, the lower half could be switched to temporarily compose a second active channel a.

In figure 4B, another exemplary embodiment of a buildup of a combined active and detection channel a, d is illustrated. With the help of the switch 7, additional light from the light source 2 can be led onto the sample 4 when the switch 7 is closed. Hence, at closed switch 7, said optical channel is the active channel a and the detection channel d simultaneously.

When the switch 7 is opened, light from the light source 2 only travels through the reference arm r and not directly to the sample 4. Hence, when the switch 7 is opened, said optical channel is only the detection channel d and not the active channel. The optical couplers 8 directly before the photodiodes 31 and the differential amplifier 32 are optional and can be used to regulate the light intensity reaching the photodiodes 31.

According to figure 5A, the exemplary embodiment comprises a plurality of n optical channels a, d wherein n is a natural number. Each one of the optical channels a, d comprises an optical switch 7 so that each one of the optical channels a, d could be an active channel a and/or a detection channel d. It is possible that only one of the switches 7 is opened/closed or that more of the switches 7 are opened/closed at the same time so that there is more than one active channel a.

According to figure 5B, there is a single optical switch 7 all active and detection channels a, d are connected with. A single reference arm r can be seen in the lower half of figure 5B. The beams F, S and the components of the detector 31, 32 are shown only partially.

With the switch 7 it is possible to determine when which one of the optical channels a, d is an active one or a detection channel or both. This is illustrated in figure 6, too. According to figure 6A, the active channel a is the center channel. The active channel a which is also a detection channel is surrounded by three detection channels d wherein the detection channels d are arranged in the manner of an equilateral triangle. In figure 6A, there are also shown three inactive channels i through which temporary radiation is neither emitted to nor collected from the sample 4. The inactive channels i might be physically present or not.

In figure 6B, a switching scheme of an exemplary embodiment is illustrated. First, the inactive channels i and the detection channels d are exchanged, compare the upper half of figure 6B. This can be done for example by rotation of the optics corresponding to the respective optical channels or by rotating the sample. It is possible both to change the detection channels d and the inactive channels i from pixel to pixel of the picture or from scan to scan of the picture wherein said scans are averaged to produce the picture.

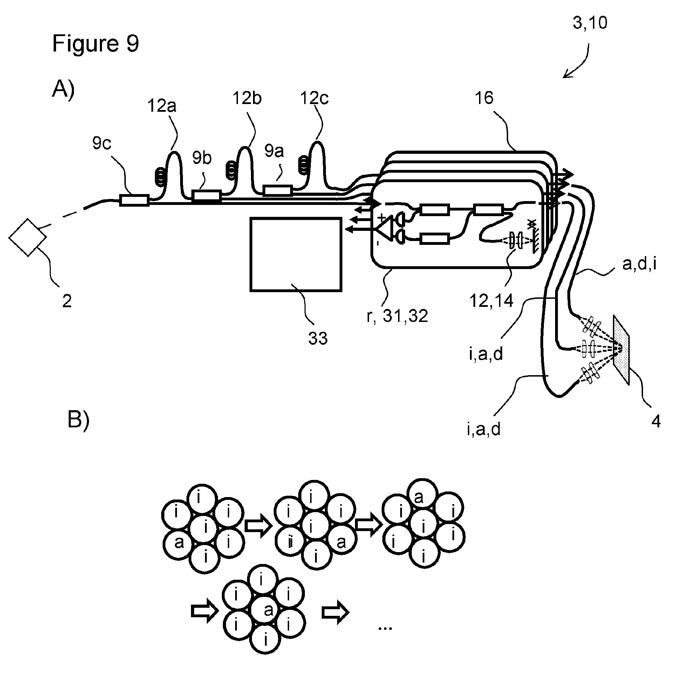

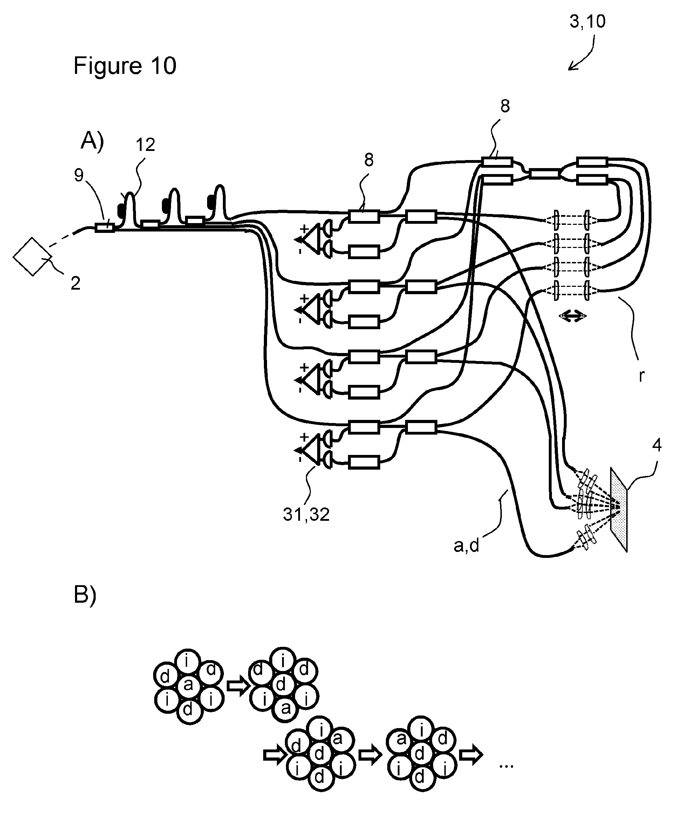

In figures 6A and 6B as well as in figures 9B and 10B, the optical channel which is marked with an "a" represents in each case both an active channel a and a detection channel d. For simplicity, in said figures only the "a" for the active channel is drawn into the corresponding circles and not the "d" for the detection channel.

Next, in the lower half of figure 6B, the active channel a is placed on a boundary of the bundle of optical channels a, d, i. The detection channels d temporary are the channels nearest the active channel a and remote from the active channel a, respectively.

It is also possible that the optical system 100 comprises seven optical channels a, d, I wherein only four channels are used at the same time as active channels a and detection channels d in order to derive data from the sample 4. The active channel a is preferably used as detection channel d as well, other than depicted in figure 6.

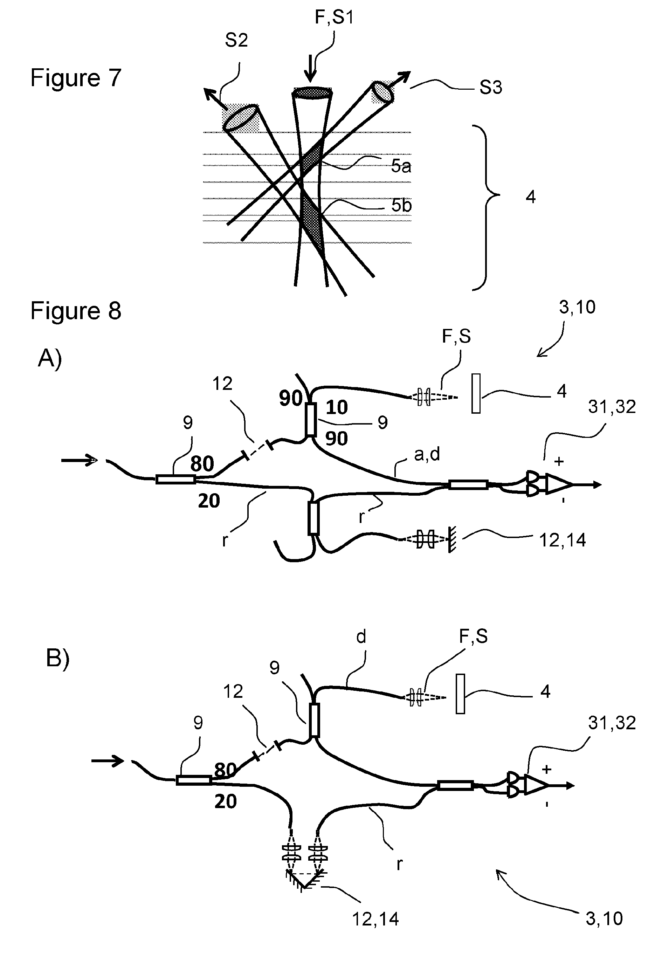

In figure 7 it is shown that the second beams S2, S3 overlap with the first beam F in different overlap regions 5a, 5b within the sample 4. The first beam F is congruent with the second beam S1. The optics, not shown, associated with the respective beams optionally can have different numerical apertures. Such a buildup is also possible for all other exemplary embodiments.

The term overlap region preferably refers to the overlap regions 5a, 5b as shown in figure 7. Alternatively, the term overlap region might also include a volume that is located beside the first beam F and from which multiple scattered photons are collected, not shown in figure 7.

In contrast to what is illustrated in figure 7, it is also possible that one of the second beams S2, S3 that is not congruent with the first beam F has a focus by the side of the first beam F. In other words, the focus of said second beam S2, S3 does not overlap with the first beam F. Thus, multiple scattering can be detected. So-called ghost pictures from a false depth of the sample 4 can thus be eliminated, for example by way of photon diffusion calculations, photon migration calculations or ray tracing calculations.

In figures 8A and 8B, the variable delay lines 12 of the exemplary embodiment are realized by sections without a fiber 11. The length of these sections can be adjusted. With the beam splitter 9, a proportion of radiation led through the reference arm r and led to the sample 4 can be adjusted. According to figure 8A, the optical channel a, d is both an active one and a detection channel. When the beam splitter 9 in the upper half of figure 8B is modified, said optical channel can be only a detection channel d as the amount of radiation coming from the light source 2 and led to the sample 4 can be reduced.

In the exemplary embodiment according to figure 9A, there are three beam splitters 9a, 9b, 9c which are connected with fiber delay lines 12a, 12b, 12c wherein the delay lines each have a fixed length. Preferably, all delay lines have the same length. By means of the beam splitters 9a, 9b, 9c, the respective light from the light source 2 is in each case divided into two parts and undergoes a different delay as travelling through a different number of delay lines 12a, 12b, 12c.

In other words, a repetition rate of the light source 2 can be quadruplicated by this arrangement. Hence, from one pulse of the light source 2, three copies are generated. Each one of these copies and the original pulse are led into one of the interferometers 16 and thus form separate optical channels a, d. For simplicity, only the optics for three of these optical channels a, d are shown in figure 9A.

As at the same time only exactly one of the interferometers 16 is provided with radiation from the light source 2. Hence, only one of the optical channels is an active and also a detection channel at the same time, compare figure 9B. Due to the delay lines 12a, 12b, 12c and the different ways the light travels through the delay lines 12a, 12b, 12c, an optical switch is not necessary in this buildup. A possible assignment scheme and flow chart can be seen in figure 9B. The interferometers 16 can be based at least in parts on non-fiber components like waver based components formed in silicon or silicon dioxide waveguide technique. Also interferometers wherein the beams travel in free space might be used. Such interferometers 16 can also be used in all other exemplary embodiments.

In the exemplary buildup according to figure 10A, a part of every light pulse from the light source 2 is led into a separate reference arm r. Hence, one of the optical channels can be an active channel a and a detection channel d at the same time wherein the three remaining channels are detection channels d. A corresponding assignment scheme and flow chart can be seen in figure 10B.

By using such delay lines 12a, 12b, 12c, it is possible to switch the state of each optical channel a, d, i for example from being an active channel to being a detection channel or to being an inactive channel up to some million times per second. A length of the delay lines 12a, 12b, 12c is preferably chosen such that at one distinct time only exactly one of the light pulses from each one of the possible active channels a can reach the sample 4. Hence, at the same time, preferably only one of the optical channels is an active channel a.

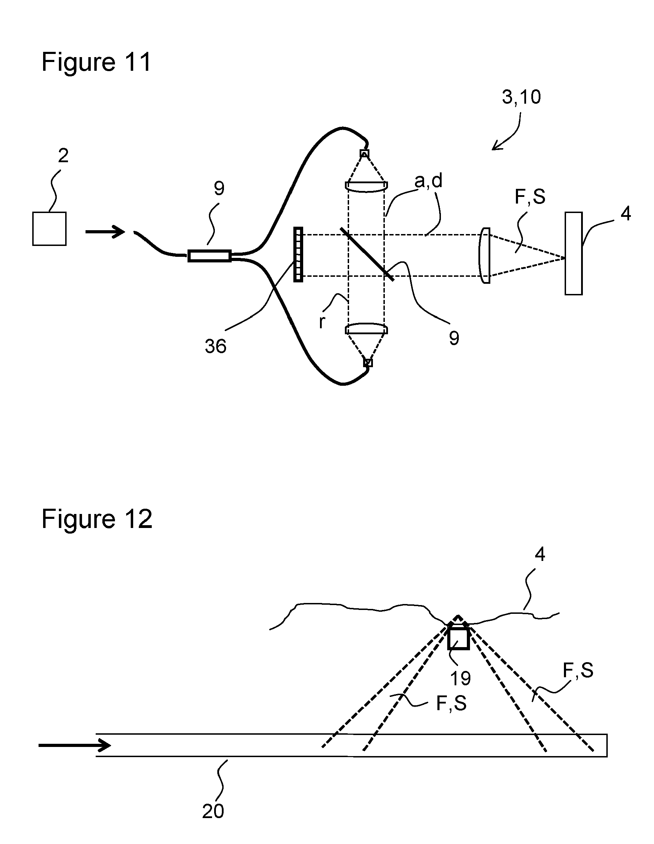

In figure 11 an exemplary embodiment is illustrated that comprises a sensor array 36 with a plurality of sensors. For example, the sensor array 36 comprises 4 x 4 or 16 x 16 single sensor elements which can be read out comparably fast. The sensor array 36 can be buildup similar to a CCD or a CMOS array.

According to the exemplary embodiment as shown in figure 12, the optical measurement system 100 comprises an endoscope 20 through which the light for the beams F, S is led to the sample 4. The endoscope 20 can be used to investigate vasculature. Due to the angular arrangement of the beams F, S, it is in particular possible to see behind opaque and/or translucent and/or absorbing and/or reflecting objects such as a stent strut 19.

The invention described herein is not restricted by description given with reference to the exemplary embodiments. Rather, the invention encompasses any features and any combination of features, including in particular any combination of features in the claims, even if this feature or this combination is not itself explicitly indicated in the claims or exemplary embodiments.

## Claims

1. An optical measurement system (100) comprising a light source (2), a detector (3) and at least two optical channels (a, d, i),
wherein
- each optical channel (a, d, i) is designed to receive and/or to emit a beam (F, S) of radiation,
- at least one of the optical channels is designed to emit a first beam (F) of radiation generated in the light source (2) and is thus an active channel (a) at least temporary,
- at least one of the optical channels is designed to receive a second beam (S) of radiation reflected and/or scattered by a sample (4) and is thus a detection channel (d) at least temporary,
- the at least one first beam (F) and the second beam (S) or at least one of the second beams (S) overlap in and/or on the sample (4) in an overlap region (5),
- an angle (A) between at least two of the beams (F, S) is chosen so that the beams (F, S) are separated from each other in an optical far field, and
- the detector (3) is designed to interferometrically derive information from the overlap region (5) of the sample (4) by means of at least the second beam (S) or by means of at least one of the second beams (S).

2. The optical system (100) according to claim 1,
wherein
- the system (100) is designed for optical coherence tomography and/or for profilometry,
- the light source (2) is a swept source which in operation periodically changes its output wavelength,
- the radiation of the beams (F, S) comprises wavelengths in the visible and/or infrared spectral range,
- a spectral width of the radiation in the at least one first beam (F) is at least 0.5% of a central wavelength of said radiation,
- the system (100) comprises at least two detection channels (d),
- the active channel (a) is also a detection channel (d),
- for the angle A it applies: sin A ≥ 0.2 NA,
wherein NA is the numerical aperture of at least one of said beams (F, S) the angle A is in between,
- the system (100) further comprises a scanner (6) which includes at least one movable mirror,
- all beams (F, S) are led to the sample (4) over said movable mirror,
- the detector (3) includes at least two photo diodes (31) for each one of the detection channels (d),
- the detector (3) includes a dual balanced differential amplifier (32) for each one of the detection channels (d),
- the detector (3) includes at least one analogue digital converter and comprises a total of at least two electronic channels, and
- the system (100) is designed to record an at least two-dimensional picture of the sample (4), said picture being a cross-sectional and/or depth resolved picture.

3. The system (100) according to claim 1 or 2,
wherein the beams (F, S) or their beam axes are not arranged within a plane.

4. The system (100) according to either one of the preceding claims,
wherein foci of at least two of the second beams (S) have different locations.

5. The system (100) according to either one of the preceding claims,
wherein a diameter of the beams (F, S) in the foci is greater than the product of the angle (A) in radian measure and a coherence length of the radiation in the at least one first beam (F).

6. The system (100) according to either one of the preceding claims,
comprising at least two active channels (a).

7. The system (100) according to either one of the preceding claims,
wherein at least one of the optical channels (a, d, i) is provided with an optical switch (7) so that said optical channel can be switched from being an active channel to being a detection channel and vice versa.

8. The system (100) according to either one of the preceding claims,
comprising at least one optical coupler (8) connected with at least one fiber based delay line (12) of fixed length,
wherein a repetition rate of the light source (2) is at least doubled.

9. The system (100) according to either one of the preceding claims,
comprising at least four optical channels (a, d, i) wherein the corresponding at least four beams (F, S) are arranged in a rotational symmetric manner at the sample (4) to be measured.

10. The system (100) according to either one of the preceding claims,
wherein at least two of the optical channels (a, d, i) are provided with different numerical aperture.

11. The system (100) according to either one of the preceding claims,
comprising an endoscope by which the beams (F, S) are led to/from the sample (4).

12. Method for operating an optical measurement system (100) according to either one of the preceding, comprising the steps:
- providing the system (100),
- providing and placing a sample (4),
- irradiating the sample (4) with radiation from the light source (2) with the active channel (a),
- detecting part of said radiation after interaction with the sample (4) with the at least one detection channel (d),
- recording a plurality of interferograms from the reflected radiation, and
- producing an at least two-dimensional picture of the sample (4).

13. The method according to the preceding claim,
wherein
- from a region of the sample (4) at least two scans are recorded,
- each one of said scans is recorded with a different active channel (a) and/or with the sample (4) being different oriented relative to the beams (F, S), and
- wherein said scans are averaged to produce the picture.

14. The method according to claim 12 or 13,
wherein Doppler-information is recorded by means of at least two detection channels (d), and
wherein said Doppler-information is used to determine a velocity of flow of a material in the sample (4) in a direction transverse to the at least one first beam (F) .

15. The method according to either one of claims 12 to 14, wherein only selected detection channels (d) are used to produce the picture, wherein a quality of the picture is improved.
